# DEMANDE DE BREVET EUROPEEN

(11) **EP 4 535 585 A1**
(43) Date de publication de la demande: **09.04.2025**
(21) Numéro de dépôt: 23306707.3
(22) Date de dépôt: 04.10.2023
(51) Int. Cl.: H02G 1/04, H02G 7/20

(54) **CONSOLE LATÉRALE PROVISOIRE POUR PYLÔNE ÉLECTRIQUE ET PROCÉDÉ D'ASSEMBLAGE CORRESPONDANT**

(71) Demandeur: RTE RESEAU DE TRANSPORT D'ELECTRICITE, 92073 Paris La Défense Cedex (FR)
(72) Inventeur: BERDUCOU, Philippe, 64290 Lasseube (FR)
(74) Mandataire: Bonnet, Michel

(57) **Abrégé**

Cette console latérale provisoire (10) de pylône électrique comporte une plaque d'ancrage (12) pour câble conducteur d'électricité et au moins un bras de maintien (14A, 14B) dont au moins une extrémité proximale (16A, 16B) est destinée à être fixée au pylône et dont au moins une extrémité distale (18A, 18B) est fixée à la plaque d'ancrage (12). Elle comporte en outre au moins un câble de haubanage (22A, 22B), dont au moins une extrémité proximale (24A, 24B) est destinée à être fixée au pylône, à une hauteur supérieure à celle de ladite au moins une extrémité proximale (16A, 16B) dudit au moins un bras de maintien (14A, 14B), et dont au moins une extrémité distale (26A, 26B) est fixée à la plaque d'ancrage (12).

## Description

La présente invention concerne une console latérale provisoire de pylône pour le transport et/ou la distribution de courant électrique par voie aérienne. Elle concerne également un procédé d'assemblage d'une telle console sur un pylône de transport et/ou de distribution de courant électrique par voie aérienne.

Un pylône électrique pour le transport aérien et/ou la distribution de courant électrique à haute ou très haute tension, par exemple à 63 kV ou 90 kV, comporte généralement plusieurs consoles s'étendant latéralement et portant chacune, par suspension à son extrémité distale, un ou plusieurs câble(s) conducteur(s) électrique(s) suspendu(s) à une ou plusieurs chaîne(s) d'isolateurs. Ce type de console latérale est soumis, généralement plus que les autres éléments du pylône, à de fortes tensions pouvant provoquer des arrachements ou des torsions importantes. Dans ces situations accidentelles, avant d'intervenir pour une réparation définitive ultérieure à planifier préalablement, il est fortement recommandé de proposer une solution provisoire de remplacement rapide pour maintenir l'ouvrage sous tension.

Une telle solution peut par exemple consister à placer au moins une poutre, généralement en bois, et au moins un palan de reprise d'effort pour la reprise en tension des câbles conducteurs. Mais cette solution monopolise de nombreuses ressources en hélicoptère, camion ou grue, et est assez rudimentaire. Elle pose en outre des problèmes de fixation sur le pylône endommagé (à cause de la poutre en bois), de contraintes (à cause du palan) et de calculs nécessairement approximatifs de tenue mécanique.

L'invention s'applique ainsi plus particulièrement à une console latérale provisoire de pylône électrique un peu plus perfectionnée, comportant :
- une plaque d'ancrage pour câble conducteur d'électricité ; et
- au moins un bras de maintien dont au moins une extrémité proximale est destinée à être fixée au pylône et dont au moins une extrémité distale est fixée à la plaque d'ancrage.

Une console latérale provisoire présentant ces éléments, notamment deux bras de maintien, est décrite dans le document de brevet KR 10-2281205 B1. Mais elle est conçue pour se fixer, non pas directement aux montants du pylône, mais à une console latérale préexistante pour en constituer une extension. Elle n'est en tant que telle pas suffisamment robuste pour servir de console provisoire en remplacement d'une console latérale endommagée.

Une autre solution un peu différente est décrite dans le document de brevet KR 10-1728239 B1. La console provisoire latérale y est conçue par un assemblage assez complexe mais robuste de cornières métalliques vissées les unes aux autres de telle sorte que deux bras de maintien prennent chacun la forme d'un ensemble de cornières montées en équerre, tandis que la plaque d'ancrage est remplacée par deux longues cornières montées l'une contre l'autre entre les bras de maintien en équerre. Des cornières supplémentaires de renfort disposées en zigzag peuvent être fixées par vissage entre les précédentes. Cela constitue un ensemble solide et capable de supporter les contraintes exercées par un câble conducteur suspendu à une chaîne d'isolateurs. Mais outre sa complexité, son assemblage sur le pylône se fait aussi par vissage des bras de maintien. Il en résulte un assemblage chronophage.

Il peut ainsi être souhaité de prévoir une console latérale provisoire de pylône qui permette de s'affranchir d'au moins une partie des problèmes et contraintes précités.

Il est donc proposé une console latérale provisoire de pylône pour le transport et/ou la distribution de courant électrique par voie aérienne, comportant :
- une plaque d'ancrage pour câble conducteur d'électricité ; et
- au moins un bras de maintien dont au moins une extrémité proximale est destinée à être fixée au pylône et dont au moins une extrémité distale est fixée à la plaque d'ancrage ;
comportant en outre au moins un câble de haubanage dont au moins une extrémité proximale est destinée à être fixée au pylône, à une hauteur supérieure à celle de ladite au moins une extrémité proximale dudit au moins un bras de maintien, et dont au moins une extrémité distale est fixée à la plaque d'ancrage.

Ainsi, le renfort simple mais efficace apporté par le ou les câble(s) de haubanage permet d'envisager un ou des bras de maintien simplifié(s) tout en conservant la robustesse de l'ensemble. De plus, la fixation du ou des câble(s) de haubanage à la plaque d'ancrage plutôt qu'au(x) bras de maintien améliore cette robustesse, puisque c'est elle qui supporte l'ensemble constitué de la chaîne d'isolateurs et du câble conducteur.

De façon optionnelle mais avantageuse, la console latérale provisoire de pylône peut comporter :
- un premier bras de maintien dont une extrémité proximale est destinée à être fixée au pylône et dont une extrémité distale est fixée à une première portion latérale de la plaque d'ancrage ; et
- un deuxième bras de maintien dont une extrémité proximale est destinée à être fixée au pylône et dont une extrémité distale est fixée à une deuxième portion latérale de la plaque d'ancrage.

Ainsi, l'ancrage de la console latérale provisoire au pylône est renforcé.

De façon optionnelle également, la console latérale provisoire de pylône peut comporter :
- un premier câble de haubanage dont une extrémité proximale est destinée à être fixée au pylône, à une hauteur supérieure à celle de ladite au moins une extrémité proximale dudit au moins un bras de maintien, et dont une extrémité distale est fixée à une première portion latérale de la plaque d'ancrage ; et
- un deuxième câble de haubanage dont une extrémité proximale est destinée à être fixée au pylône, à une hauteur supérieure à celle de ladite au moins une extrémité proximale dudit au moins un bras de maintien, et dont une extrémité distale est fixée à une deuxième portion latérale de la plaque d'ancrage.

Ainsi, la stabilité et la robustesse de l'ancrage de la console latérale provisoire au pylône sont renforcées par les deux câbles de haubanage.

De façon optionnelle, chaque câble de haubanage est de longueur suffisante par rapport à celle de chaque bras de maintien pour présenter, lorsqu'il est tendu et fixé au pylône, un angle supérieur ou égal à 30° par rapport à un plan horizontal. Cela améliore le soutien de la plaque d'ancrage.

De façon optionnelle également, la console latérale provisoire de pylône peut en outre comporter une ceinture de reprise d'effort dont une extrémité proximale est solidaire de l'extrémité proximale de l'un dudit au moins un bras de maintien et dont une extrémité distale est destinée à être fixée au pylône. Cela permet de compenser, par étaiement, une distance trop grande entre une fixation de l'un dudit au moins un bras de maintien au pylône et un noeud de traverses de ce dernier.

De façon optionnelle également, l'extrémité distale de la ceinture de reprise d'effort est pourvue d'une pince de fixation à un montant du pylône.

De façon optionnelle également, la ceinture de reprise d'effort comporte un tendeur à vis.

De façon optionnelle également, l'extrémité proximale de chaque bras de maintien est pourvue d'une pince de fixation à un montant du pylône.

De façon optionnelle également, chaque bras de maintien est essentiellement en forme de tube creux cylindrique de section circulaire.

De façon optionnelle également, ledit au moins un bras de maintien est de même longueur égale à 1,75 mètres +/- 10%, ou 2,5 mètres +/- 10%, ou 3,25 mètres +/- 10%.

Il est également proposé un procédé d'assemblage d'une console latérale provisoire selon l'invention sur un pylône de transport et/ou de distribution de courant électrique par voie aérienne, comportant :
- une fixation de ladite au moins une extrémité proximale dudit au moins un bras de maintien au pylône ; et
- une fixation de ladite au moins une extrémité proximale dudit au moins un câble de haubanage au pylône, à une hauteur supérieure à celle de ladite au moins une extrémité proximale dudit au moins un bras de maintien, et de ladite au moins une extrémité distale dudit au moins un câble de haubanage à la plaque d'ancrage.

De façon optionnelle, au moins l'une de ladite au moins une extrémité proximale dudit au moins un bras de maintien est fixée à moins de 15 cm d'un noeud de traverses du pylône.

L'invention sera mieux comprise à l'aide de la description qui va suivre, donnée uniquement à titre d'exemple et faite en se référant aux dessins annexés dans lesquels :
- la figure 1 représente schématiquement en perspective la structure générale d'une console latérale provisoire de pylône, selon un mode de réalisation de l'invention,
- la figure 2 illustre plus précisément une plaque d'ancrage ainsi que les extrémité distales de bras de maintien et de câbles de haubanage de la console latérale provisoire de la figure 1,
- la figure 3 illustre plus précisément une ceinture de reprise d'effort et les extrémités proximales des bras de maintien de la console latérale provisoire de la figure 1,
- la figure 4 illustre un pylône de transport et/ou de distribution de courant électrique par voie aérienne sur lequel est montée la console latérale provisoire de la figure 1,
- la figure 5 illustre les étapes successives d'un procédé d'assemblage d'une console latérale provisoire telle que celle de la figure 1 sur un pylône de transport et/ou de distribution de courant électrique par voie aérienne, selon un mode de réalisation de l'invention.

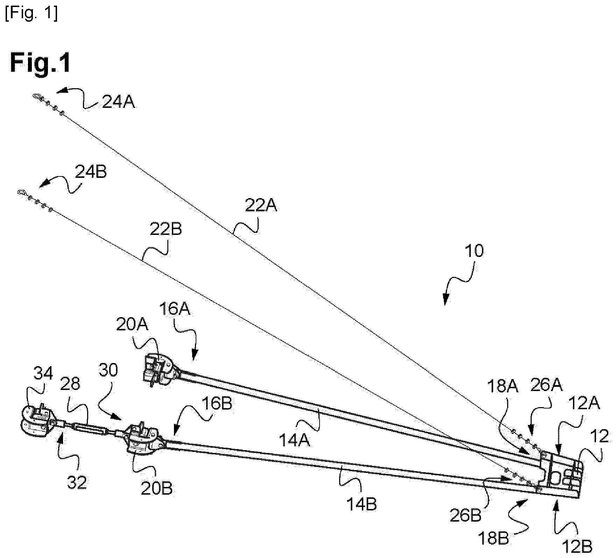

La console latérale provisoire 10 représentée schématiquement en perspective sur la figure 1 est destinée à être assemblée sur un pylône de transport et/ou de distribution de courant électrique par voie aérienne.

Elle comporte une plaque d'ancrage 12 destinée à porter au moins une chaîne d'isolateurs elle-même porteuse d'au moins un câble conducteur d'électricité.

Elle comporte en outre des premier et deuxième bras de maintien 14A, 14B dont les extrémités proximales respectives 16A, 16B sont destinées à être fixées au pylône et dont les extrémités distales respectives 18A, 18B sont respectivement fixées à des première et deuxième portions latérales 12A, 12B de la plaque d'ancrage 12. Elle pourrait ne comporter qu'un bras de maintien dans une version simplifiée, mais l'ancrage sur le pylône serait moins performant. Elle pourrait aussi en comporter plus de deux, mais pour une complexité accrue. Chacun des deux bras de maintien 14A, 14B est par exemple en forme de tube creux cylindrique de section circulaire. Compte tenu des charges envisagées, notamment une charge maximale d'utilisation de 430 kg en bout de bras, des tubes ronds métalliques de diamètre 48,3 mm et d'épaisseur 4 mm conviennent. Conformément aux configurations et dimensions habituelles des pylônes électriques et des consoles latérales, les premier et deuxième bras de maintien de la console latérale provisoire 10 sont en outre avantageusement d'une même longueur égale à 1,75 mètres +/- 10%, ou 2,5 mètres +/- 10%, ou 3,25 mètres +/- 10%.

Selon le mode de réalisation non limitatif de la figure 1, les extrémités distales 18A, 18B des premier et deuxième bras de maintien 14A, 14B sont percées radialement de trous traversants et placées en face de trous correspondants percés dans les première et deuxième portions latérales 12A, 12B de la plaque d'ancrage 12 pour y être fixées par boulonnage. Les deux extrémités proximales 16A, 16B sont respectivement pourvues de deux pinces 20A, 20B de fixation à deux montants respectifs du pylône. Chaque pince de fixation 20A, 20B est par exemple en « C » et à distance inter-mors réglable par vissage de l'un d'entre eux pour une préhension réglable et solide des montants.

La console latérale provisoire 10 comporte en outre des premier et deuxième câbles de haubanage 22A, 22B dont les extrémités proximales respectives 24A, 24B sont destinées à être fixées au pylône, à des hauteurs supérieures à celles des extrémités proximales des premier et deuxième bras de maintien 14A, 14B, et dont les extrémités distales respectives 26A, 26B sont fixées respectivement aux première et deuxième portions latérales 12A, 12B de la plaque d'ancrage 12. Elle pourrait ne comporter qu'un câble de haubanage dans une version simplifiée, ou un câble de haubanage se dédoublant en deux extrémités distales, mais la stabilité et la robustesse de l'ancrage sur le pylône seraient moins renforcées. Elle pourrait aussi en comporter plus de deux, mais pour une complexité accrue. Les câbles de haubanage 22A, 22B sont par exemple en acier galvanisé à sept torons de dix-neuf fils chacun, pour un diamètre extérieur de 8 mm.

De façon optionnelle, la console latérale provisoire 10 comporte en outre une ceinture de reprise d'effort 28, par exemple en acier inoxydable, dont une extrémité proximale 30 est solidaire de l'extrémité proximale de l'un des premier et deuxième bras de maintien 14A, 14B, en l'occurrence l'extrémité proximale 16B du deuxième bras de maintien 14B dans l'exemple de la figure 1, et dont une extrémité distale 32 est destinée à être fixée au pylône. A cet effet, cette extrémité distale 32 est pourvue d'une pince 34 de fixation à un montant du pylône, différent de ceux auxquels sont fixés les bras de maintien 14A, 14B. La pince de fixation 34 est par exemple, comme les deux autres, en « C » et à distance inter-mors réglable par vissage de l'un d'entre eux pour une préhension réglable et solide du montant concerné.

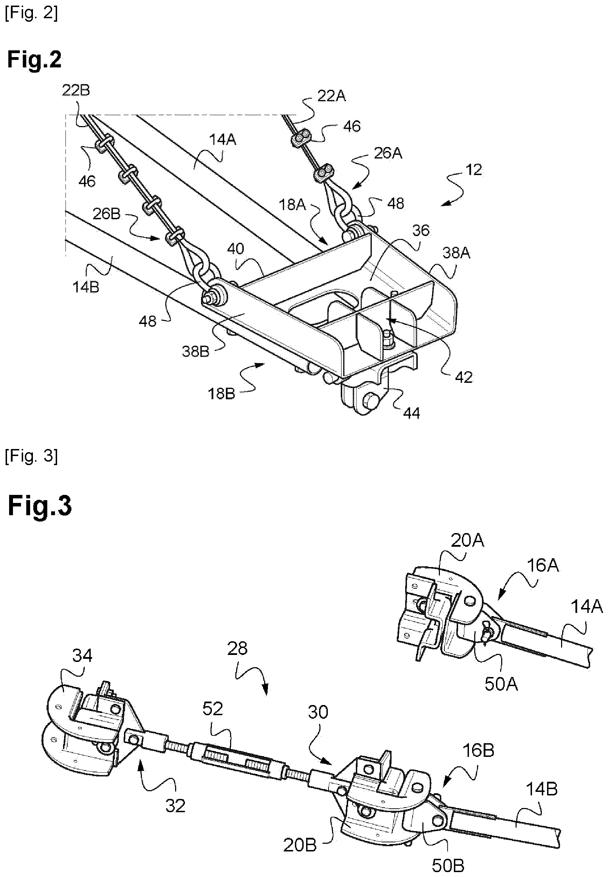

La plaque d'ancrage 12 et les extrémités distales 18A, 18B, 26A, 26B des bras de maintien 14A, 14B et des câbles de haubanage 22A, 22B sont représentées de façon plus détaillée sur la figure 2.

La plaque d'ancrage 12 est de forme générale trapézoïdale isocèle. Elle présente un fond évidé 36 et des parois de renfort dont deux parois latérales 38A, 38B longeant respectivement les deux côtés inclinés du trapèze, une paroi frontale 40 longeant sa base et des parois internes supplémentaires 42, lui conférant ainsi un rapport robustesse/poids optimal. Elle est pourvue en outre sous son fond évidé 36 d'un système 44 d'accrochage connu en soi pour chaîne d'isolateurs.

Les trous, percés dans les première et deuxième portions latérales 12A, 12B de la plaque d'ancrage 12 pour la fixation par boulonnage des extrémités distales 18A, 18B des premier et deuxième bras de maintien 14A, 14B, sont disposés dans son fond évidé 36 aux voisinages respectifs des deux parois latérales 38A, 38B et parallèlement à ces dernières, par exemple deux trous au voisinage de et s'étendant parallèlement à la première paroi latérale 38A, ainsi que deux trous au voisinage de et s'étendant parallèlement à la deuxième paroi latérale 38B. Il en résulte une fixation des premier et deuxième bras de maintien 14A, 14B sous la plaque d'ancrage 12 avec la même inclinaison entre eux que les deux parois latérales 38A, 38B. Cela permet aux deux bras de maintien 14A, 14B d'être suffisamment écartés entre eux à leurs extrémités proximales 16A, 16B pour présenter une distance correspondant à celle entre les deux montants de pylône auxquels ils sont fixés tout en se rejoignant quasiment, selon une distance minimale entre leurs extrémités distales 18A, 18B pour correspondre aux dimensions de la plaque d'ancrage 12 qui est nettement moins large que le pylône.

Les deux extrémités distales 26A, 26B des câbles de haubanage 22A, 22B sont introduites dans deux oeillets de fixation 48 eux-mêmes fixés respectivement aux deux parois latérales 38A, 38B et sont retournées en boucles à l'aide de serre-câbles à étrier 46. Ainsi, le renfort apporté par les câbles de haubanage 22A, 22B s'exerce avantageusement directement sur la plaque d'ancrage 12 puisque c'est elle qui supporte le poids de la chaîne d'isolateurs et du câble conducteur.

La ceinture de reprise d'effort 28 et les extrémités proximales 16A, 16B des bras de maintien 14A, 14B sont représentées de façon plus détaillée sur la figure 3.

Les pinces de fixation 20A, 20B sont raccordées aux extrémités 16A, 16B par des pièces de liaison 50A, 50B à cardan, présentant chacune deux axes de rotation orthogonaux dont l'un solidaire de l'extrémité 16A ou 16B et l'autre solidaire de la pince de fixation 20A ou 20B. L'extrémité proximale 30 de la ceinture de reprise d'effort 28 est solidaire de l'extrémité proximale 16B du deuxième bras de maintien 14B par l'intermédiaire de la pince de fixation 20B à laquelle elle est vissée selon un degré de liberté en rotation. Son extrémité distale 32 est vissée de la même façon à la pince de fixation 34. Dans l'exemple non limitatif de la figure 3, la partie centrale de la ceinture de reprise d'effort 28 comporte en outre un tendeur à vis 52 pour régler avantageusement la tension entre les deux pinces de fixation 20B et 34 lorsque celles-ci enserrent deux montants du pylône.

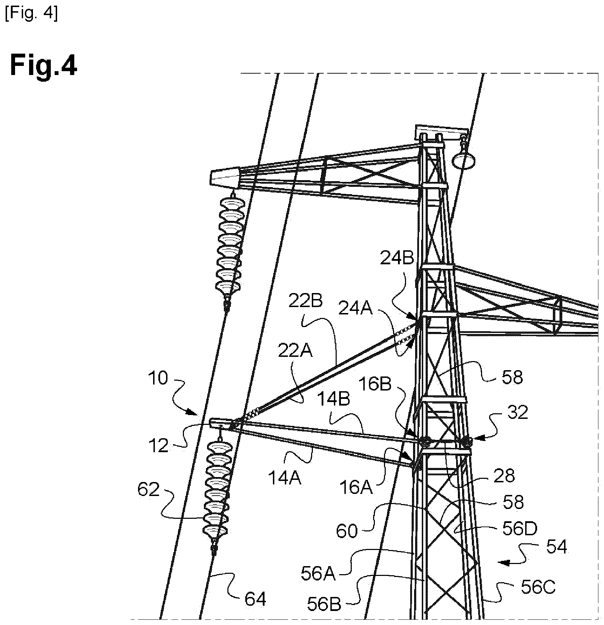

La figure 4 illustre un pylône 54 de transport et/ou de distribution de courant électrique par voie aérienne sur lequel est montée la console latérale provisoire 10.

Le pylône 54 comporte quatre montants, dont :
- deux montants 56A, 56B sur lesquels sont respectivement fixées les extrémités proximales 16A, 16B, 24A, 24B des bras de maintien 14A, 14B et des câbles de haubanage 22A, 22B ; et
- deux montants opposés 56C, 56D à l'un desquels est fixée l'extrémité distale 32 de la ceinture de reprise d'effort 28.

Des traverses en cornières 58 viennent former une structure renforcée en treillis entre les quatre montants 56A, 56B, 56C, 56D. Les lieux de fixation des extrémités de ces traverses sur les montants du pylône 54, par boulonnage direct ou à l'aide de goussets, forment les noeuds de traverses 60 de cette structure en treillis.

La console latérale provisoire 10 est montée sur le pylône 54 tout d'abord par fixation des extrémités proximales 16A, 16B des bras de maintien 14A, 14B sur les montants 56A, 56B, à l'aide des pinces de fixation 20A, 20B. Bien que dans l'exemple de la figure 4 les montants 56A et 56B ne présentent jamais de noeuds à la même hauteur, il est avantageux de fixer au moins l'une des extrémités proximales 16A, 16B des bras de maintien 14A, 14B à moins de 15 cm d'un noeud de traverses 60 du pylône 54, sachant que 20 à 30 cm reste une distance acceptable. Dans l'exemple de la figure 4, c'est par exemple le cas de l'extrémité proximale 16A.

La console latérale provisoire 10 est montée sur le pylône 54 en outre par fixation des extrémités proximales 24A, 24B des câbles de haubanage 22A, 22B sur les montants 56A, 56B, au-dessus des bras de maintien 14A, 14B. Cette fixation se fait par exemple à l'aide de serre-câbles après avoir entouré les extrémités proximales 24A, 24B des câbles de haubanage 22A, 22B autour des montants 56A, 56B, aux niveaux de noeuds de traverses ou de goussets du pylône 54. Dans l'illustration de la figure 4, cela se fait au niveau du raccordement d'une console latérale supérieure.

On notera que chacun des premier et deuxième câbles de haubanage 22A, 22B est de longueur suffisante par rapport à celle de chacun des premier et deuxième bras de maintien 14A, 14B pour présenter, lorsqu'il est tendu et fixé au pylône 54, un angle supérieur ou égal à 30° par rapport à un plan horizontal, dans lequel ou au voisinage duquel s'étendent d'ailleurs avantageusement les bras de maintien 14A, 14B.

Dans l'exemple de la figure 4, la ceinture de reprise d'effort 28 est également utilisée, fixée et tendue entre le montant 56B auquel est fixée l'extrémité proximale 16B du bras de maintien 14B et le montant opposé 56C. Elle présente un intérêt de renforcement du montage de la console latérale provisoire 10 sur le pylône 54 en remplissant une fonction d'étaiement entre les deux montants 56B et 56C, notamment lorsque l'une des extrémités proximales 16A, 16B des bras de maintien 14A, 14B est fixée au pylône à plus de 30 cm de tout noeud de traverses 60 et doit donc être étayée.

Enfin, la figure 4 illustre une chaîne d'isolateurs 62 portée par la plaque d'ancrage 12 et un câble conducteur 64 accroché à l'extrémité inférieure de cette chaîne d'isolateurs 62.

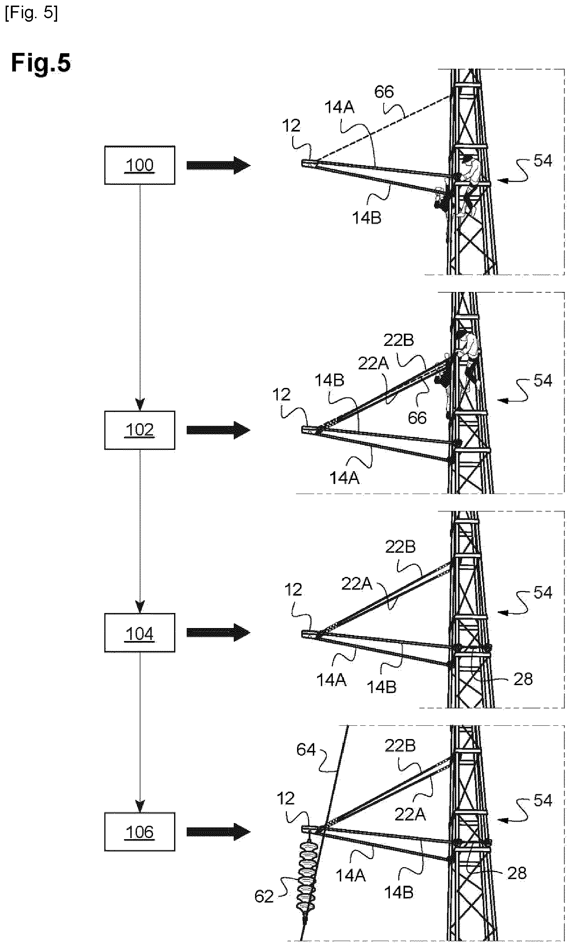

Un procédé d'assemblage de la console latérale provisoire 10 sur le pylône 54 va maintenant être détaillé en référence à la figure 5.

Au cours d'une étape 100, les extrémités proximales 16A, 16B des deux bras de maintien 14A, 14B sont respectivement fixées à deux montants du pylône 54 par deux techniciens de maintenance. La plaque d'ancrage 12 fixée aux extrémités distales 18A, 18B des deux bras de maintien 14A, 14B est elle-même portée par une corde 66 provisoirement attachée en hauteur sur le pylône 54 pour lever et maintenir l'ensemble dans un plan à peu près horizontal.

Au cours d'une étape 102, les techniciens de maintenance grimpent en hauteur sur le pylône 54 de façon à se tenir désormais au-dessus des bras de maintien 14A, 14B. Ils fixent alors respectivement les extrémités proximales 24A, 24B des deux câbles de haubanage 22A, 22B aux deux mêmes montants du pylône 54. Ils peuvent régler la longueur des câbles de sorte qu'ils présentent l'angle souhaité d'au moins 30° par rapport à l'horizontale. On notera que les extrémités proximales 24A, 24B des câbles de haubanage 22A, 22B peuvent être fixées à des hauteurs différentes sur les montants du pylône 54, en fonction des dispositions des noeuds ou goussets auxquels il est possible de se raccorder. On notera aussi que les extrémités distales 26A, 26B des câbles de haubanage 22A, 22B peuvent être fixées à la plaque d'ancrage 12 lors de cette étape. Mais il peut être plus facile de les fixer préalablement au sol. A la fin de cette étape, la corde 66 peut être retirée.

Au cours d'une étape optionnelle 104, la ceinture de reprise d'effort 28 est ajoutée et fixée en tension, par effet d'étaiement en compression, entre l'un des montants auxquels sont fixés les bras de maintien 14A, 14B et un montant opposé du pylône 54.

Enfin, au cours d'une dernière étape 106, la chaîne d'isolateurs 62 et le câble conducteur 64 sont installés sous la plaque d'ancrage 12 à l'aide d'une échelle à crochets.

II apparaît clairement qu'une console latérale provisoire de pylône telle que celle décrite précédemment permet le remplacement provisoire simple mais robuste d'une console latérale endommagée. L'opération de remplacement peut en outre être suffisamment rapide tout en étant correctement sécurisée pour minimiser son impact sur le fonctionnement du réseau de transport et de distribution d'électricité.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Console latérale provisoire (10) de pylône (54) pour le transport et/ou la distribution de courant électrique par voie aérienne, comportant :
- une plaque d'ancrage (12) pour câble conducteur d'électricité (64) ; et
- au moins un bras de maintien (14A, 14B) dont au moins une extrémité proximale (16A, 16B) est destinée à être fixée au pylône (54) et dont au moins une extrémité distale (18A, 18B) est fixée à la plaque d'ancrage (12) ;
**caractérisée en ce qu'**elle comporte en outre au moins un câble de haubanage (22A, 22B) dont au moins une extrémité proximale (24A, 24B) est destinée à être fixée au pylône (54), à une hauteur supérieure à celle de ladite au moins une extrémité proximale (16A, 16B) dudit au moins un bras de maintien (14A, 14B), et dont au moins une extrémité distale (26A, 26B) est fixée à la plaque d'ancrage (12).

2. Console latérale provisoire (10) de pylône (54) selon la revendication 1, comportant :
- un premier bras de maintien (14A) dont une extrémité proximale (16A) est destinée à être fixée au pylône (54) et dont une extrémité distale (18A) est fixée à une première portion latérale (12A) de la plaque d'ancrage (12) ; et
- un deuxième bras de maintien (14B) dont une extrémité proximale (16B) est destinée à être fixée au pylône (54) et dont une extrémité distale (18B) est fixée à une deuxième portion latérale (12B) de la plaque d'ancrage (12).

3. Console latérale provisoire (10) de pylône (54) selon la revendication 1 ou 2, comportant :
- un premier câble de haubanage (22A) dont une extrémité proximale (24A) est destinée à être fixée au pylône (54), à une hauteur supérieure à celle de ladite au moins une extrémité proximale (16A, 16B) dudit au moins un bras de maintien (14A, 14B), et dont une extrémité distale (26A) est fixée à une première portion latérale (12A) de la plaque d'ancrage (12) ; et
- un deuxième câble de haubanage (22B) dont une extrémité proximale (24B) est destinée à être fixée au pylône (54), à une hauteur supérieure à celle de ladite au moins une extrémité proximale (16A, 16B) dudit au moins un bras de maintien (14A, 14B), et dont une extrémité distale (26B) est fixée à une deuxième portion latérale (12B) de la plaque d'ancrage (12).

4. Console latérale provisoire (10) de pylône (54) selon l'une quelconque des revendications 1 à 3, dans laquelle chaque câble de haubanage (22A, 22B) est de longueur suffisante par rapport à celle de chaque bras de maintien (14A, 14B) pour présenter, lorsqu'il est tendu et fixé au pylône (54), un angle supérieur ou égal à 30° par rapport à un plan horizontal.

5. Console latérale provisoire (10) de pylône (54) selon l'une quelconque des revendications 1 à 4, comportant en outre une ceinture de reprise d'effort (28) dont une extrémité proximale (30) est solidaire de l'extrémité proximale (16B) de l'un (14B) dudit au moins un bras de maintien (14A, 14B) et dont une extrémité distale (32) est destinée à être fixée au pylône (54).

6. Console latérale provisoire (10) de pylône (54) selon la revendication 5, dans laquelle l'extrémité distale (32) de la ceinture de reprise d'effort (28) est pourvue d'une pince (34) de fixation à un montant (56C) du pylône (54).

7. Console latérale provisoire (10) de pylône (54) selon la revendication 5 ou 6, dans laquelle la ceinture de reprise d'effort (28) comporte un tendeur à vis (52).

8. Console latérale provisoire (10) de pylône (54) selon l'une quelconque des revendications 1 à 7, dans laquelle l'extrémité proximale (16A, 16B) de chaque bras de maintien (14A, 14B) est pourvue d'une pince (20A, 20B) de fixation à un montant (56A, 56B) du pylône (54).

9. Console latérale provisoire (10) de pylône (54) selon l'une quelconque des revendications 1 à 8, dans laquelle chaque bras de maintien (14A, 14B) est essentiellement en forme de tube creux cylindrique de section circulaire.

10. Console latérale provisoire (10) de pylône (54) selon l'une quelconque des revendications 1 à 9, dans laquelle ledit au moins un bras de maintien (14A, 14B) est de même longueur égale à 1,75 mètres +/- 10%, ou 2,5 mètres +/- 10%, ou 3,25 mètres +/- 10%.

11. Procédé d'assemblage d'une console latérale provisoire (10) selon l'une quelconque des revendications 1 à 10 sur un pylône (54) de transport et/ou de distribution de courant électrique par voie aérienne, comportant une fixation (100) de ladite au moins une extrémité proximale (16A, 16B) dudit au moins un bras de maintien (14A, 14B) au pylône (54), **caractérisé en ce qu'**il comporte en outre une fixation (102) de ladite au moins une extrémité proximale (24A, 24B) dudit au moins un câble de haubanage (22A, 22B) au pylône (54), à une hauteur supérieure à celle de ladite au moins une extrémité proximale (16A, 16B) dudit au moins un bras de maintien (14A, 14B), et de ladite au moins une extrémité distale (26A, 26B) dudit au moins un câble de haubanage (22A, 22B) à la plaque d'ancrage (12).

12. Procédé d'assemblage selon la revendication 11, dans lequel au moins l'une de ladite au moins une extrémité proximale (16A, 16B) dudit au moins un bras de maintien (14A, 14B) est fixée à moins de 15 cm d'un noeud de traverses (60) du pylône (54).
